# EUROPÄISCHE PATENTSCHRIFT

(11) **EP 1 282 510 B1**
(45) Veröffentlichungstag und Bekanntmachung des Hinweises auf die Patenterteilung: **22.09.2004**
(21) Anmeldenummer: 01933521.5
(22) Anmeldetag: 18.05.2001
(51) Int. Cl.: B32B 31/10, B26D 5/32

(54) **VERFAHREN UND VORRICHTUNG ZUM TRENNEN EINES LAMINATES**
METHOD AND DEVICE FOR CUTTING A LAMINATE
PROCEDE ET DISPOSITIF DE COUPE D'UN STRATIFIE

(30) Priorität: 18.05.2000 CH 9942000
(43) Veröffentlichungstag der Anmeldung: 12.02.2003
(73) Patentinhaber: Steinemann Technology AG, 9015 St. Gallen (CH)
(72) Erfinder: HALDNER, René, CH-9200 Gossau (CH); FITZI, Hans, CH-9100 Herisau (CH); STURZENEGGER, Ernst, CH-9202 Gossau (CH)
(74) Vertreter: Frommhold, Joachim, Dr.
(86) Internationale Anmeldenummer: PCT/CH2001/000310
(87) Internationale Veröffentlichungsnummer: WO 2001/087599

(56) Entgegenhaltungen:
- EP-A- 0 706 863
- DE-A- 4 412 091
- GB-A- 2 228 255

## Beschreibung

### Technisches Gebiet

Die Erfindung betrifft ein Verfahren zum Kaschieren und Trennen eines Laminates, bestehend aus einer bahnförmigen Folie und Einzelbögen, wobei das Laminat an einer Schneidstation vorbeigeführt und die Schneidfunktion eines Schneidmessers rechnergesteuert in Abhängigkeit zur Zufuhrgeschwindigkeit erfolgt, und die Einzelbögen Stoss an Stoss oder geschuppt der Kaschierung zugeführt werden.

Die Erfindung betrifft ferner eine Vorrichtung zum Trennen eines Laminates, bestehend aus einer bahnförmigen Folie und Einzelbogen, wobei das Laminat an einer Schneidstation vorbeigeführt wird und die Schneidfunktion des Schneidmessers rechnergesteuert in Abhängigkeit zur Zufuhrgeschwindigkeit erfolgt.

### Stand der Technik

Die relativ dünne Folie aus Kunststoffmaterial wird von einer Rolle endlos abgenommen. Im Falle von Einzelbögen werden die Bögen von einem Stapel entnommen. Beide zusammen werden als Laminat dem Kaschierwerk zugeführt. Um eine Verschmutzung der Walzen im Kaschierwerk zu verhindern, überlappt man häufig die einzelnen aufeinanderfolgenden Bögen im Randbereich. Sie werden über- oder unterschuppt mit der Folie überzogen. Aber auch ein Kaschieren der einzelnen Bögen, Stoss an Stoss, ist denkbar. Nach dem Kaschieren sind die Einzelbögen durch die Folie miteinander verbunden. Vor der Weiterverarbeitung in einem nachgeschalteten Arbeitsprozess muss das Laminat wiederum zu einzelnen Laminatbögen vereinzelt bzw. das Laminat an der Stossstelle von zwei Bögen durchgetrennt werden.

Die EP 706 863 schlägt ein neues Trennverfahren sowie eine neue Vorrichtung vor zum Trennen von kaschierten Laminaten, bestehend aus Einzelbögen sowie einer Folie. Das Laminat wird für die Herstellung von Laminatabschnitten kontinuierlich an einer Schneidstation vorbeigeführt. Durch Wärmewirkung eines thermischen Schneidmessers wird die Folie im Bereich der Bogenstossstellen getrennt. Das Schneidmesser wird für jeden Schnitt auf die gleiche Geschwindigkeit wie das Laminat beschleunigt.

Es wird lediglich die Folie durchgeschnitten. Die Bewegung des Schneidmessers erfolgt über einen Umlaufregelantrieb. Über Rechnermittel können die Verarbeitungsgeschwindigkeit der Anlage sowie die Bogenlänge eingegeben und ein präziser Schnitt durchgeführt werden. Ein Sensor bzw. eine Lichtschranke überwacht die Vorderkante des jeweils ankommenden Bogens, so dass aufgrund von Fördergeschwindigkeit und Bogenlänge der Schnitt innerhalb eines engen Toleranzbereiches präzise durchgeführt wird. Das beschriebene Verfahren wurde im Hinblick auf das Nassschneiden konzipiert. Beim trockenen Schneiden, z.B. bei Thermolaminieren, ist eine noch grössere Genauigkeit für den Trennschnitt erwünscht.

In der Praxis zeigte sich häufig, dass je nach besonderen Laminatqualitäten Haftmittel zum Teil die Laminierung und zunehmend die Schneidstation gleichsam der Flanschenhals ist. Eine Steigerung wurde entweder durch den einen oder den anderen Arbeitsgang verunmöglicht. Erfahrungsgemäss steigt die Tendenz, dass bei höheren Geschwindigkeiten mehr fehlerhafte Bögen entstehen. Wird der Fehler erkannt, so müssen die unbrauchbaren Bögen sofort aus der Bearbeitungsstrasse entfernt werden. Die Anlagegeschwindigkeit kann zu diesem Zweck heruntergefahren oder die Anlage abgestellt werden. Jeder Wiederstart ergab insofern ein kleines Problem, als dass die Schneidkadenz bei momentan variierender Geschwindigkeit rechnermässig nicht mehr nachvollziehbar war. In der Zeitspanne, in der die Geschwindigkeit der Bogenzufuhr einer Veränderung unterworfen würde, müsste mit Hochleistungsrechner die Beschleunigung des rotierenden Schneidmessers festgelegt und entsprechend gesteuert bzw. geregelt werden. Dies wäre auch mit noch so schnellen Rechnern nicht möglich. Man hat versucht, sich mit einem sogenannten Handstart zu behelfen. Dabei wurde vom Betreuungspersonal von Hand der Takt für den ersten oder die ersten Schnitte diktiert. Je höher die Bearbeitungsgeschwindigkeit, desto schwieriger ist jedoch ein solches Vorgehen. Mit einer Lösung gemäss EP 706 863 wird der ganze Schneidvorgang auf sehr hoher Stufe beherrscht. Im Sinne der Produktionssteigerung ist auch eine sichere Steigerung der Schneidkadenz bei noch grösserer Treffschärfe für den Schnitt notwendig.

Die DE 44 12 091 zeigt ein Verfahren und eine Vorrichtung zum Kaschieren und Trennen eines Laminates, bestehend aus einer bahnförmigen Folie und Einzelbögen, wobei das Laminat an einer Schneidstation vorbeigeführt und der Trenneinsatz eines Schneidmessers rechnergesteuert in Abhängigkeit zur Zufuhrgeschwindigkeit erfolgt, und die Einzelbögen Stoss an Stoss oder geschuppt der Kaschierung zugeführt werden.

Der DE 44 12 091 wurde die Aufgabe zugrunde gelegt, die Trennung des Verbundes in kaschierten Einzelbögen zu verbessern. Gelöst wurde die Aufgabe der Trennung von kaschierten Druckbögen dadurch, dass einzelne noch nicht kaschierte Bögen aufeinanderfolgend auf Stoss oder überlappend angeordnet und mit einer kontinuielrich zugeführten Folie zu einem ununterbrochenen Verbund kaschiert werden. Der Verbund wird einer Trenneinrichtung mit anschliessender Vereinzelung der kaschierten Bögen zugeführt. In der Trenneinrichtung wird ein Messer oder dergleichen zu vorbestimmten Zeitpunkten auf die Folie abgesenkt und nach vorbestimmter Zeitdauer wieder von der Folie abgehoben. Das Messer wird für die vorbestimmte Zeitdauer in Bewegungsrichtung des Verbundes bewegt und auf im wesentlichen die Geschwindigkeit des Verbundes gesteuert. Dabei wird vorgeschlagen, dass die Stossstellen aufeinanderfolgender Bögen des Verbundes mittels eines Messgerätes, z.B. eines Laserdetektors, gemessen und zur Erzeugung eines Steuersignals ausgenutzt werden, das in Verbindung mit einem der Geschwindigkeit des Verbundes entsprechenden Steuersignal einer Steuereinrichtung für ein in Bewegungsrichtung des Verbundes und senkrecht zur Oberfläche des Verbundes beweglichen Messer zugeführt wird.

In der Praxis gelingt es nur in besonderen Fällen die Kanten von kaschierten Bögen mit genügender Sicherheit zu erfassen, so dass in der industriellen Praxis weder die Trennschärfe noch die Schneidkadenz bei grosser Transportgeschwindigkeit möglich wurde.

### Darstellung der Erfindung

Der Erfindung wurde nun die Aufgabe gestellt, nach Lösungen zu suchen, die ein präzises Erkennen der Kanten der einzelnen Bögen und einen präzisen Schneideingriff erlauben, selbst bei höchsten Transportgeschwindigkeiten von 50 - 100 Metern pro Minute und mehr.

Diese Aufgabe wird erfindungsgemäß durch ein Vefahren gemäß Anpruch 1 und eine Vorrichtung gemäß Anpruch 6 gelöst.

Das erfindungsgemässe Verfahren ist dadurch gekennzeichnet, dass die Trennstellen noch vor der Kaschierung laufend durch einen Kantensensor an der oberen Hinterkante der Bögen präzise detektiert werden und die Schneidfunktion für die Folie auf der Basis der präzise detektierten kantensignale eingeleitet wird.

Die erfindungsgemässe Vorrichtung ist dadurch gekennzeichnet, dass in dem Bereich vor der Laminierung ein Sensor zur laufenden Detektierung der jeweiligen Hinterkante der Bögen angeordnet und die Schneidfunktion für die Folie auf der Basis der präzise detektierten Kantensignale durchführbar ist.

Die bisherige Technik konzentrierte sich auf Sensortechniken für die exakte Erfassung der jeweils vorlaufenden Kante eines Bogens. Dies war aufgrund des Einsatzes von Lichtsensoren gezwungenermassen der Fall. Mit dem Lichtstrahl kann eine Überlappung nicht durchdrungen werden. Die Vorderkante ist nach dem Schnitt sofort frei, wenn der vorangehende Bogen nach dem Schnitt etwas schneller abgezogen wird. Bis zum Eintreffen konnte aufgrund der Kenntnis der genauen Bogenlänge die Trennfunktion sicher eingestellt werden. Die neue Lösung verlangt Sensormittel für das Erkennen der Kante des hinteren Endes von jedem Bogen. Dies hat unerwartete Vorteile: Die Rechenleistung für den Trennvorgang reduziert sich auf das Berücksichtigen des exakten Sensorsignales sowie die Fördergeschwindigkeit, da ja die Trennstelle selbst vor dem Trenneingriff erfasst wird. Es ist gar kein unüberwindliches Risiko mehr, ob vom Stillstand beschleunigt wird oder eine Geschwindigkeitsänderung der Bogenzufuhr eintritt. Durch das Übernehmen der jeweiligen Geschwindigkeit bzw. des Geschwindigkeitsverlaufes kann der Messereinsatz in den Bereich von einem Millimeter und weniger gesteuert bzw. geregelt werden. Bevorzugt wird das Verfahren bei unterschuppten Bögen angewendet, was in der Praxis des Kaschierens mittels Laminaten mehrheitlich der Fall ist. Für den speziellen Fall, dass die Bögen Stoss an Stoss zugeliefert werden, ist mit den bekannten Sensormitteln die hintere Kante, die mit der Vorderkante des nachfolgenden Bogens übereinstimmt, nicht mehr mit genügender Zuverlässigkeit erfassbar. Hier kann durch ein leichtes "nach oben Wölben" der durchlaufenden Bögen, z.B. in dem mittleren Bereich, dort, wo der Sensorstrahl auftritt, die Kante künstlich sichtbar gemacht und die obere nun vorstehende Kante sicher detektiert werden. Bevorzugt erfolgt die Detektierung der Kante etwa in der Mitte der Hinterkante. Beste Resultate wurden bisher durch Laserüberwachtechnik mittels entsprechenden Sende- und Empfangssignalen für die Kantendetektierung erzielt. Es können jedoch auch Infrarotstrahler oder Mikrowellensensoren eingesetzt werden. Bei der Unterschuppung kann auch der Blasdruck einer Luftblasdüse zur laufenden Detektierung der Hinterkante verwendet werden. Zumindest theoretisch lässt sich die Detektierung auch bei Überschuppung gleicherweise sicherstellen. Die Überschuppung wird jedoch in der Praxis seltener angewendet und hat den kleinen Nachteil, dass die obenliegende Kante gleichsam vorläuft. Die Kante läuft auf den Signalsender zu, so dass dieser nach rückwärts gerichtet angewendet werden muss. Bei der Unterschuppung wird der Strahl gegen die Maschine gerichtet und stört die Umgebung nicht.

Gemäss einer besonders vorteilhaften Ausgestaltung der Vorrichtung wird vor einer Schneidstation ein Kaschierwalzenpaar und noch vor dem Kaschierwalzenpaar der Sensor zur laufenden Detektierung der Bogenhinterkante angeordnet und die Hinterkante am unkaschierten Bogen erfasst. Nach dem momentanen Kenntnisstand handelt es sich um die zur Zeit optimalste Lösung. Die Kanten der unkaschierten Bögen sind besonders bei Unterschuppung messerscharf erkennbar, und entsprechend genau lässt sich die Kante zeitlich und örtlich detektieren, sogar in einem Bereich von Zehntel Millimetern, so dass der Trennschnitt effektiv millimetergenau durchgeführt werden kann. Die unverarbeiteten Bögen werden auf der einen Endseite einer Anlage gelagert, im wesentlichen horizontal und vorzugsweise unterschuppt über die Verfahrensstrasse in Richtung der anderen Endseite der Anlage geführt. Die Schneidstation weist ein mit der Geschwindigkeit des Laminates während dem Trenneingriff mitbewegbares Schneidmesser und einen Umlaufregelantrieb für das Schneidmesser auf. Das thermische Schneidmesser ist zum Nasstrennen der Folie ausgebildet. Die Umlaufgeschwindigkeit des Schneidmessers ist über Rechnermittel aufgrund der Anlagegeschwindigkeit und des Sensorsignales steuerbar zur Beschleunigung des Schneidmessers auf die Geschwindigkeit des Laminates und für einen präzisen Schnitt der Folie. Weil der Schnitt gemäss der neuen Lösung sehr genau ist, kann das Trennmesser auch für trockene Laminate eingesetzt werden.

Da gegenüber der Lösung die EP 706 863 bzw. EP 586 642 die notwendige Rechnerleistung geringer sein kann, gestattet die neue Lösung, selbst bei momentan variierender Durchlaufgeschwindigkeit der Bögen die Bewegungsgeschwindigkeit des Messers anzupassen. Damit muss, z.B. bei einem Start oder Neustart, höchstens der erste Bogen als Abfall aus der Anlage entnommen werden, wenn dieser zu lange in dem Kaschierwalzenpaar festgehalten wurde.

Ist der Sensor als Infrarot-, als Mikrowellen- oder Laserstrahtsender und -empfänger ausgebildet, so wird der Sensorstrahl in Transportrichtung, bevorzugt leicht geneigt, ausgerichtet. Vorzugsweise wird das Empfangssignal etwa senkrecht vom Sensor empfangen, zumindest im Falle der Laserstrahltechnik.

Gemäss einer weiteren Ausgestaltung kann das Schneidmesser als Laserschneidmesser, vorzugsweise mit mehreren unbeweglichen Laserschneidköpfen, ausgebildet werden, wobei der Schneideingriff an sich analog aufgrund der Anlagegeschwindigkeit sowie des Sensorsignales zeitlich steuerbar ist. Die Laserschneidtechnik hat den grossen Vorteil, dass keine beweglichen Teile für das Trennen zwingend benötigt werden müssen, wenn der Laserstrahl selbst elektronisch gesteuert einen zugeordneten Abschnitt bearbeitet. Gemäss diesem Beispiel werden mehrere Laserschneidköpfe auf einer Linie über die Breite der Maschine benötigt.

### Kurze Beschreibung der Erfindung

Die Erfindung wird nun an Hand von einigen Beispielen mit weiteren Einzelheiten erläutert. Es zeigen:
- die Figur 1: ein Grundschema für das Kaschieren und Trennen von Bögen gemäss Stand der Technik;
- die Figur 2a: den Kernansatz der neuen Lösung mit einem Sensor für die Kantendetektierung der hinteren Bogenkante;
- die Figur 2b: ein Beispiel für den Geschwindigkeitsverlauf des Schneidmessers bei konstanter Zuführgeschwindigkeit der Bögen;
- die Figur 3: die neue Lösung schematisch dargestellt;
- die Figur 4a: die Sensoreinrichtung mit Strahlen, vor allem Laserstrahlen;
- die Figur 4b: die drei Möglichkeiten der Bogenzuführung, Stoss an Stoss, überschuppt und unterschuppt;
- die Figur 5: die wichtigsten Komponenten für das Kaschieren und Trennen mit Auftragswerk;
- die Figur 6: ein Beispiel einer ganzen Anlage.

### Wege und Ausführung der Erfindung

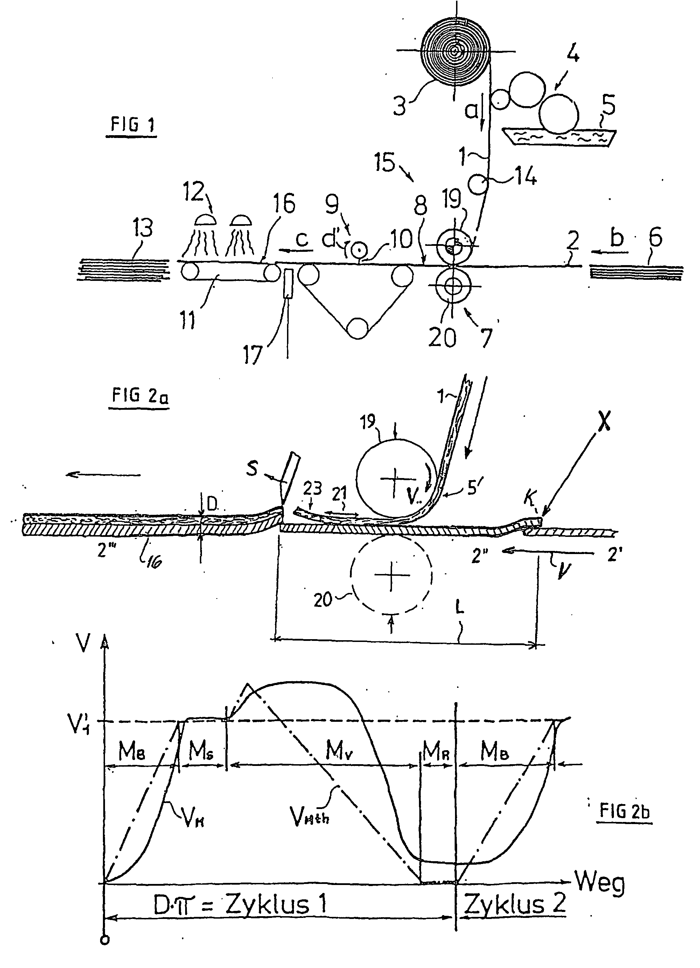

In der Folge wird nun auf die Figur 1 Bezug genommen: Die Schneidstation 9 weist auf der Folienseite ein thermisches Schneidmesser 10 auf, das an einem Messerbalken befestigt ist und sich über die gesamte Breite des Laminates erstreckt. Der Messerbalken dreht sich in Pfeilrichtung d', also gleichsinnig zur Vorschubrichtung c des Laminates 8. Das Schneidmesser 10 besteht vorzugsweise aus einem elektrischen Draht oder aus einem feinen Metallstreifen, der durch elektrischen Widerstand aufgeheizt werden kann. Nach der Schneidstation 9 ist im Vorschubbereich des Laminates 8 eine Lichtschranke bzw. ein Messgeber 17 angeordnet, mit dessen Hilfe die Vorderkante eines Laminatabschnittes ermittelt werden kann. Durch eine etwas erhöhte Geschwindigkeit an der Transportvorrichtung 11 ist dafür gesorgt, dass die getrennten Laminatabschnitte 16 sofort abgezogen werden und dass dadurch zwischen den einzelnen Laminatabschnitten 16 ein Zwischenraum entsteht. Der zurückgelegte Weg der Laminatabschnitte 16 wird beispielsweise über einen Inkrementalgeber 18 am Kaschierwalzenpaar 7 ermittelt. Aufgrund der ermittelten Werte aus den Gebern 17 und 18 und in Abhängigkeit zu den vorher in die Steuervorrichtung einge-gebenen Bogenlängen wird jeweils der nächstfolgende Schneidvorgang gesteuert bzw. geregelt.

Die Figur 1 zeigt rein schematisch den Vorgang des Kaschierens einzelner Bögen mit einer Folie 1 in einem Kaschierwerk 15. Die Folie 1 wird als endlose Bahn von einer Rohfolienrolle 3 in Pfeilrichtung a abgezogen und dabei auf einer Seite mit einem flüssigen Kleber beschichtet. Der Kleber 5 wird über ein Auftragswerk 4 aufgetragen und verteilt. Die mit Kleber beschichtete Folie 1 wird anschliessend den Kaschierwalzen 7 zugeführt. Die Einzelbögen 2 werden von einem Bogenstapel 6 entnommen und mit Hilfe eines Bogenanlegers in Pfeilrichtung b hintereinander ebenfalls in den Walzenspalt der Kaschierwalzen geführt. Das gebildete Laminat 8 wird mit dem Schneidmessers 10 der Schneidstation 9 wieder zu Laminatbögen getrennt, wobei lediglich die Folie 1 durchgeschnitten wird. Die Laminatabschnitte 16 gelangen in Pfeilrichtung c dann auf eine Transportvorrichtung 11, auf welcher sie eine Härtestation 12 durchlaufen, in welcher der Kleber durch UV-Strahlen ausgehärtet wird. Anschliessend werden die Laminatabschnitte 16 auf einen Laminatstapel 13 gelegt. Die Kaschierwalzen 7 bestehen aus einer oberen Folienwalze oder Mutterwalze 19 sowie einer unteren Bogenwalze oder Gegendruckwalze 20.

In der Figur 2a ist ein einzelner Laminatabschnitt 16 durch Überzeichnung der Dicke D sowie einer Länge L dargestellt. Dabei kann der Bogen 2"' ein Papier- oder Kartonbogen sein. Die Folie 1' besteht im Regelfall aus transparentem Kunststoff. Beide werden durch eine Kleberschicht 5' verbunden. Solange der Kleber, im Falle von strahlenhärtbaren Klebern, noch nicht gehärtet ist, lässt sich die Folie 1' gemäss Pfeil 21 relativ leicht gegenüber dem Bogen 2"' verschieben, was jedoch aus vielerlei Gründen nicht erwünscht ist. Zum Beispiel ist es für die weitere Verarbeitung nachteilig, wenn ein Folienrand gegenüber dem Bogen 2"' vorsteht. Es wird angestrebt, die Folie für die Kaschierung möglichst zugfrei und damit auch möglichst spannungsfrei zum Laminat zu verbinden. Viele Versuche haben gezeigt, dass sich der beim nassen Schneiden entstehende und abstehende Abrissrand 23 (Figur 2a) sofort ablegt und die Kleberverbindung nach der Aushärtung an der betreffenden Stelle mit der übrigen Verbindung fast ebenbürtig ist. In der Figur 2a ist ferner die eigentliche Kaschierung, auch hier zum leichteren Verständnis überzeichnet, durch das Kaschierwalzenpaar 7 bzw. die Folienwalze 19 und die Bogenwalze resp. Gegendruckwalze 20 strichliert dargestellt. Mit dem Buchstaben X ist die Detektierung der Kante K über einen Strahlensensor angedeutet. Das heisst, im Unterschied zur Lösung gemäss EP 0 706 863, wird nicht mehr die vordere Stirnseite, (meistens über Lichtsensoren), sondern die obere Kante K des hinteren Bogenendes detektiert und die Geschwindigkeit VB des Bogens 2" bzw. der Geschwindigkeitsverlauf erfasst. Beim Einsatz der neuen Lösung spielt die Länge L eines Einzelbogens für die Berechnung des Trenneinsatzes gemäss der neuen Lösung keine Rolle mehr. Abweichungen der Längenabmessungen der Einzelbögen haben im Rahmen von Toleranzwerten keine Störfunktion auf die Schnittgenauigkeit mehr. Der Einsatz des Schneidmessers kann mit noch grösserer Exaktheit dem Geschwindigkeitsverlauf des Bogens angepasst werden, so dass z.B. auch beim Start mit variabler Geschwindigkeit der Messereinsatz präzise ist.

Die Figur 2b ist ein Beispiel für ein Diagramm für den Geschwindigkeitsverlauf des Messers bei konstanter Bogengeschwindigkeit über einer Umlaufbewegung bzw. über einen ganzen Zyklus 1. Dabei bedeuten MB Messerbeschleunigung, Ms Messerschneidkontakt, Mv Messerverzögerung und MR Messerruhezone. Das Diagramm, das die Geschwindigkeit über dem Weg darstellt, zeigt sehr deutlich, wie das Messer vor dem Schnitt extrem beschleunigt wird (Vm) bis zu der Geschwindigkeit V1. Danach muss das Messer mit dem Laminat gleich schnell mitbewegt werden und geht dann in eine Verzögerungsphase VMth über. Wichtig ist nun auch hier, dass nicht nur der Geschwindigkeitsverlauf während einer Umdrehung, insbesondere für den Schnitt gesteuert wird, sondern, dass der Vorgang von einem Inkrementalgeber JG, besonders vorzugsweise demselben wie für die Steuerung des Anlegers, gesteuert wird, damit die Schneidfolge genau mit der bearbeiteten Bogenlänge übereinstimmt. Bevorzugt wird der Antrieb über Basisprogramme für den Bewegungsverlauf gesteuert, welche für die je spezifischen Anlagegeschwindigkeiten und Geschwindigkeitsänderungen rechnerisch angepasst werden.

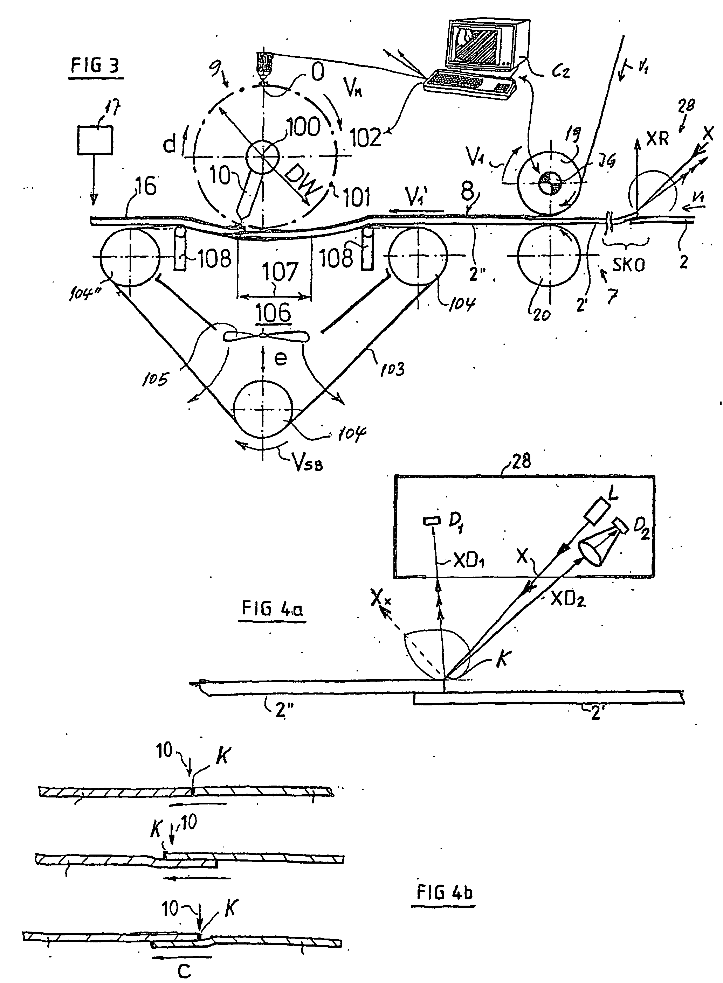

In der Folge wird nun auf die Figur 3 Bezug genommen, welche die Kaschierung des Laminates sowie die Erzeugung der Laminatabschnitte für ein Nassschneiden der Folie zeigen. Das Schneidmesser 10 führt bezüglich einer Drehachse 100 eine Rotationsbewegung aus, wobei der Wirkkreis des Schneidmessers, das ein an sich bekanntes thermisches Schneidmesser sein kann, strichpunktiert, mit einer Kreislinie 101 eingezeichnet ist. Die normale Drehrichtung ist mit d angegeben, der Durchmesser des Wirkkreises 101 mit DW. Der Antrieb 102 ist nicht dargestellt, kann aber eine an sich bekannte Ausführung sein. Der Antrieb 102 muss für eine sehr präzise und eine extrem rasch wechselnde Schnelligkeit der Umlaufbewegung des Schneidmessers ausgelegt und entsprechend von einem Rechner C₂ aus steuerbar sein. Das Laminat bewegt sich von den Kaschierwalzen 7 her horizontal auf einem mit der gleichen Geschwindigkeit V1 mitlaufenden Saugband 103, das über drei Umlenkrollen 104, 104' bzw. 104" mit einer genügenden Vorspannung e gespannt ist. Ein Ventilatorrad 105 symbolisiert die Funktion eines Unterdruckes für eine kleine Kammer 106. Dadurch wird das Laminat nicht nur vom Stützband 103 mitbewegt, sondern gleichzeitig mit einer entsprechenden Haftkraft des Saugbandes 103 durch die Schneidstation 9 geführt. Ausserhalb eines Bereiches 107, in dem der Schneideingriff des Schneidmessers 10 erfolgt, sind unterhalb des Stützbandes 103 zwei Auflagestellen 108 bzw. 108' angeordnet. Die effektive Schneidbahn bzw. Kreislinie 101 ist um ein geringes Mass tiefer gegenüber der ungestörten Bewegungsbahn des Laminates, so dass das Schneidmesser 10 das Laminat entsprechend nach unten drückt, wobei nicht nur die Wärmeeinwirkung sondern gleichzeitig auch eine geringe mechanische Schneidkraft wirkt.

Mit dem Bezugszeichen 17 ist eine Lichtschranke entsprechend der Lösung gemäss EP 706 863 bezeichnet. In vielen Fällen bietet die zusätzliche Kontrolle der vorderen Stirnseite weiterhin Vorteile, z.B. für die automatische Überwachung der ganzen Trennfunktion sowie der Kaschierung und z.B. auch das Zählen der Bögen. Hat einmal ein Bogen die Kontrollstrecke SKO für die Hinterkante passiert, "weiss" die Sensoreinrichtung 28 nichts mehr. Dagegen wird bei einem Start oder Wiederstart die Anwesenheit des Bogens 2" über die Lichtschranke 17 festgestellt und ein entprechendes Störsignal abgegeben. Dabei wird die Trennfunktion über die Sensoreinrichtung 28 gesteuert, wohingegen andere Überwachfunktionen von der Lichtschranke 17 sichergestellt werden.

Die Figur 4a zeigt einen Laser-Sensor, der auf optischer Kantenerkennung basiert. Die Kanten der Bögen werden am leichtesten erkannt, wenn diese geschuppt, bevorzugt unterschuppt auf Förderbändern unter dem Laserstrahl durchgeführt werden. Eine Laserdiode mit Fokussieroptik (L) der Sensoreinrichtung 28 erzeugt auf der Förderebene einen winzigen roten Lichtpunkt, der gut sichtbar ist. Der Laserstrahl (X) trifft dabei schräg auf die Fläche auf. Gemäss Lichtstreutheorie wird der grösste Teil des Lichtes in Richtung (Xx) reflektiert. Der Detektor D1 empfängt dann mehr Licht (XD1) als Detektor D2 (XD2). Trifft der Laserstrahl auf eine Kante, ist genau das Gegenteil der Fall, D2 empfängt mehr Licht als D1. Das kompakte Gerät erkennt dank seines gut fokussierten Laserstrahles auch noch kleinste Kanten. Ein eingebauter Mikrokontroller unterdrückt unterwünschte Mehrfachpulse, indem das Gerät nach jeder erfassten Oberkante während einer Totzeit inaktiv geschaltet wird. Verschiedene Programme garantieren eine optimale Anpassung an alle Zählprobleme:
- Fixe Totzeit: Einstellbar in Millisekunden.
- Dynamische Totzeit: Der Mikrokontroller überwacht dauernd die Pulsfolge und eliminiert Mehrfachpulse auch bei variierender Fördergeschwindigkeit, indem er die Totzeit dynamisch der Pulsfolge anpasst.
- Synchronisation mit dem Maschinentakt: Über einen Synchronisationseingang kann der Maschinentakt (z.B. aus einem Drehgeber) synchronisiert werden. Damit entspricht der Totbereich einer definierten Distanz, die absolut unabhängig ist von der Fördergeschwindigkeit.

In der Figur 4b ist oben ein Laminat 8 Stoss an Stoss, in der Mitte, überschuppt und unten unterschuppt dargestellt, mit einer jeweiligen optimalen Schneideinwirkung des Schneidmessers 10 zur Trennung des Laminates.

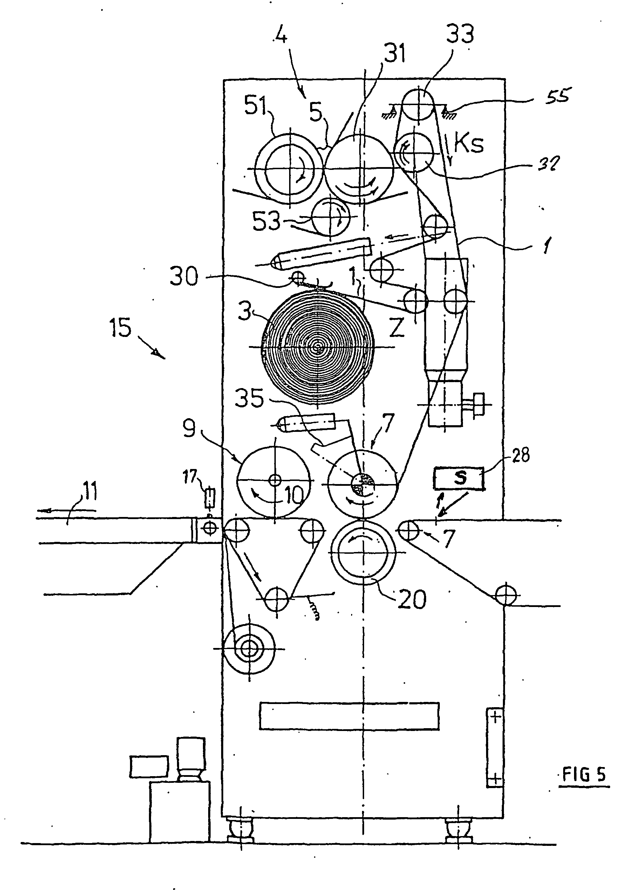

In der Figur 5 ist das Kaschierwerk 15 konkreter dargestellt. Die Rohfolie 1 wird von einer antriebslosen, jedoch mit einer gegebenenfalls kontrollierten leichten Rückhaltekraft und Bremseinrichtung 30 von der Rohfolienrolle 3 abgezogen. Dabei ergibt sich eine variierende Zugkraft "Z", welche von einer Auftragswalze 31 sowie einer daran abdrückbaren Anpresswalze 32 erzeugt wird. Von dem Inkrementalgeber 18 der Folienwalze 19 wird die Auftragswalze 31 gesteuert. Damit die mit Kleber versehene Folie 1 auf eine minimale Spannkraft Ks einstellbar ist, umschliesst die Folie eine Messwalze 33, welche die Drehzahl der Auftragswalze 31 übersteuert bzw. auf Grund eines Spannungsmesswertes auf die gewünschte Umfangsgeschwindigkeit anpasst. Ein Bogenzuführtisch 34 ist ebenfalls auf die wirksame Umfangsgeschwindigkeit der Folienwalze 19 gesteuert, so dass Bogen und Folie mit der selben Geschwindigkeit in das Kaschierwalzenpaar 7 geführt werden. Die Folie 1 weist dabei nur gerade eine so grosse Spannung auf, damit sie straff gespannt ist, aber nicht gezogen wird. Die Kaschierwalzen 7 weisen eine an sich bekannte Lagerung 35 auf, damit sich der Achsabstand mit entsprechend kleinen Kräften für die dickere Schuppenpartie kurzfristig vergrössern kann.

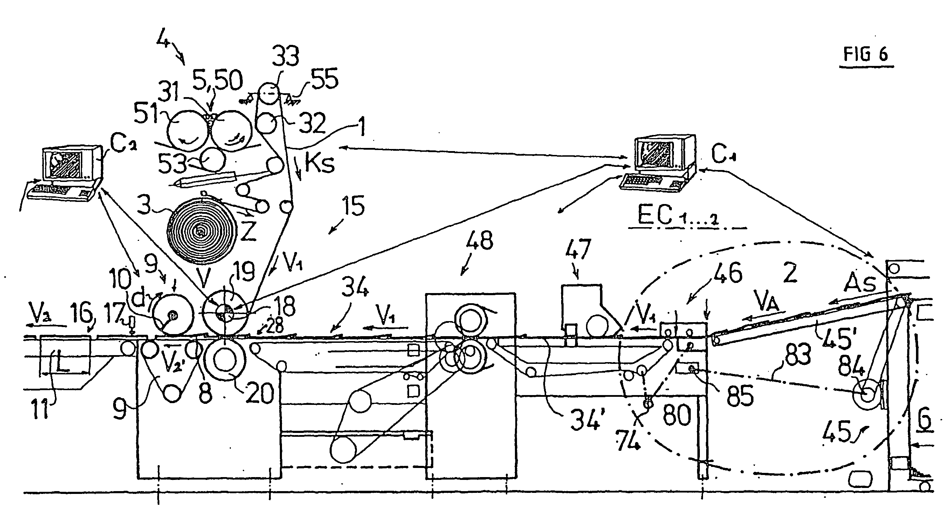

In der Folge wird nun auf die Figur 6 Bezug genommen. Die Figur 6 zeigt rein schematisch den Vorgang des Kaschierens einzelner Bögen mit einer Folie 1 in einem Kaschierwerk 15. Die Folie 1 wird als endlose Bahn von einer Rohfolienrolle 3 abgezogen und dabei auf einer Seite mit einem flüssigen Kleber beschichtet. Der UVpolymerisierbare Kleber wird über ein Auftragswerk 4 aufgetragen und verteilt. Die mit Kleber beschichtete Folie 1 wird anschliessend den Kaschierwalzen 7 zugeführt. Die Einzelbögen 2 werden von einem Bogenstapel 6 entnommen und mit Hilfe eines Bogenanlegers 45 ineinander in Pfeilrichtung (VA, V1) ebenfalls in den Walzenspalt der Kaschierwalzen 7 eingeführt. Das in den Kaschierwalzen gebildete endlose Laminat 8 wird mit dem Schneidmesser 10 der Schneidstation 9 in Laminatabschnitte 16 getrennt, wobei lediglich die Folie 1 durchgeschnitten wird. Die Laminatabschnitte 16 gelangen dann auf eine Transportvorrichtung 11, auf welcher sie eine Härtestation 12 durchlaufen und der Kleber mit UV-Strahlen ausgehärtet wird. Anschliessend werden die Laminatabschnitte 16 auf einen Laminatstapel 13 gelegt (Figur 6). Die Kaschierwalzen 7 bestehen aus einer oberen Folienwalze oder Mutterwalze 19 sowie einer unteren Bogenwalze oder Gegendruckwalze 20.

Die Schneidstation 9 weist auf der Folienseite ein thermisches Schneidmesser 10 auf, das an einem Messerbalken befestigt ist und sich über die gesamte Breite des Laminates 8 erstreckt. Der Messerbalken dreht sich in Pfeilrichtung d, also gleichsinnig zur Vorschubrichtung des Laminates 8. Das Schneidmesser beschreibt dabei eine Umlaufbahn. Das Schneidmesser 10 besteht vorzugsweise aus einem elektrischen Draht oder aus einem feinen Metallstreifen, der durch elektrischen Widerstand aufgeheizt werden kann. Nach der Schneidstation 9 ist im Vorschubbereich des Laminates 8 eine Lichtschranke oder irgend ein anderer geeigneter Messgeber 17 angeordnet, mit dessen Hilfe die Vorderkante eines Laminatabschnitts ermittelt werden kann. Durch eine etwas erhöhte Geschwindigkeit an der Transportvorrichtung 11 ist dafür gesorgt, dass die getrennten Laminatabschnitte 16 sofort abgezogen werden und dass dadurch zwischen den einzelnen Laminatabschnitten 16 ein Zwischenraum entsteht. Die Geschwindigkeit des Laminates 8 wird beispielsweise über einen Inkrementalgeber 18 am Kaschierwalzenpaar 7 ermittelt. Aufgrund der ermittelten Werte aus den Gebern 17 und 18 und in Abhängigkeit der vorher in die Steuervorrichtung eingegebenen Bogenlängen wird jeweils der nächstfolgende Schneidvorgang gesteuert beziehungsweise geregelt. Erfindungsgemäss wird angestrebt, dass die Folie für die Kaschierung ohne Schubkräfte und möglichst zugfrei, damit aber auch möglichst spannungsfrei zum Laminat verbunden wird. Viele Versuche haben gezeigt, dass ein beim nassen Schneiden entstehender und abstehender Abrissrand sich sofort ablegt und die Kleberverbindung, nach der Aushärtung, an der betreffenden Stelle mit der übrigen Verbindung ebenbürtig ist.

Selbstverständlich kann die Anlage auch für andere Klebverbindungen ausgestaltet sein. Dabei können lösungsmittelhaltige Kleber, Dispersionskleber oder gar vorbeschichtete Folien eingesetzt, werden. Je nach Art des eingesetzten Klebers würde eventuell die Aushärtestation 12 (Figur 6) nach der Schneidstation 9 wegfallen, und an deren Stelle könnte ein Trockner vor die Kaschierwalzen 7 treten. Die Schneidstation 9 könnte auch nach der Aushärtestation angeordnet sein. Das erfindungsgemässe Verfahren erlaubt jedoch, vor allem auch das Trennen der Folie unmittelbar nach dem Verlassen des Kaschierwalzenpaares nass durchzuführen. In bestimmten Fällen ist es vorteilhaft, das Laminat 8 zunächst auf eine Rolle aufzuwickeln und die Rolle zu einem späteren Zeitpunkt in einer separaten Arbeitsstufe zu Einzelabschnitten 16 aufzuteilen.

Die Rohfolie 1 wird von einer antriebslosen, jedoch mit einer leichten Rückhaltekraft bewirkenden Bremseinrichtung von der Rohfolienrolle 3 abgezogen. Dabei ergibt sich eine variierende Zugkraft "Z", welche von einer Auftragswalze 31 sowie einer daran andrückbaren Anpresswalze 32 erzeugt wird. Von dem Inkrementalgeber 18 der Folienwalze 19 wird die Auftragwalze 31 gesteuert. Damit die mit Kleber versehene Folie 1 auf eine minimale Spannkraft Ks einstellbar ist, umschliesst die Folie eine Messwalze 33, welche die Drehzahl der Auftragwalze 31 übersteuert bzw. auf die gewünschte Umfangsgeschwindigkeit auf Grund eines gewünschten Spannungsmesswertes regelt. Ein Bogenzuführband 34 ist ebenfalls auf die wirksame Umfangsgeschwindigkeit der Folienwalze 19 angetrieben, so dass Bogen und Folie mit der selben Geschwindigkeit in das Kaschierwalzenpaar 7 geführt werden. Die Folie 1 weist dabei nur gerade eine so grosse Spannung auf, damit die straff gespannt ist, aber nicht gezogen wird. Die Kaschierwalzen 7 weisen eine an sich bekannte Lagerung auf, damit sich der Achsabstand mit entsprechend kleinen Kräften für die dickere Schuppenpartie kurzfristig vergrössern kann. Die wesentlich langsamer umlaufende Dosierwalze 51 (Pfeil) richtet sich sowohl nach der gewünschten Geschwindigkeit der Folie 1 wie auch nach der jeweils gewünschten Schichtdicke des Kleberauftrages. Da die Auftragswalze 31 schneller dreht (2 Pfeile) als die Dosierwalze 51, bleibt der Kleberfilm auf der Auftragswalze 31. Die Kleberfilmdicke wird aber bewusst grösser gewählt als die gewünschte Auftragsdicke auf der Folie 1. Der Kleberüberschuss kann entweder durch ein einstellbares Rakel oder eine unabhängig in der Drehzahl einstellbare Verteilwalze 53 abgenommen werden. Bei dem einstellbaren Rakel erfolgt dies durch die Spaltdicke, bei der Verteilwalze durch Variieren der Drehzahl und/oder des Dosierabstandes. Je nach Aufgabenstellung können bei allen Walzen Reinigungsrakel, zum Beispiel auch für die seitliche Begrenzung des Kleberauftrages, eingesetzt werden. Wichtig ist jedoch, dass das Geschwindigkeitsverhältnis der Auftragswalze 31 zu der Dosierwalze 51 unabhängig einstellbar ist, ebenso der Anpressdruck bzw. der Dosierspalt zwischen der Auftragswalze 31 und der Verteilwalze 53. Als weiterer wichtiger Punkt für eine optimale Kleberauftragung hat sich ferner erwiesen, dass unabhängig der "Kleberwalzen" (der Auftragswalze 31, der Dosierwalze 51 sowie der Verteilwalze 53) die Anpresswalze 32 Mittel aufweist zur unabhängigen Anpressung der Anpresswalze 32 auf die Auftragswalze 31. Die Anpresswalze 32 wird vorzugsweise nicht motorisch angetrieben. Auf diese Weise kann jede Teilfunktion unabhängig optimiert werden. Die Messwalze 33 wird vorzugsweise auf wegfreien Kraftmesslagern 55 gelagert. Es ist dazu eine Regeleinrichtung vorgesehen, welche rechnerunterstützt über Rechnermittel C₂ die Umdrehungsgeschwindigkeit der Auftragswalze 31 auf eine bestimmte vorwählbare Spannkraft Ks von zum Beispiel einigen hundert Gramm regelt, damit die Folie zugfrei in die Kaschierung geführt werden kann. Vom Rechner C₂ können ebenfalls die übrigen Steuerbefehle abgegeben werden, zum Beispiel für eine Kleberdosier- und Auftragsstation.

Die Figur 6 zeigt die steuertechnische Koordination der Hauptfunktionen, insbesondere des Anlegers 45 bzw. der Sequenz As, der Austagegeschwindigkeit V1 bzw. des Kaschierwerkes 15 und der Schneidstation 9, weiche in dem gezeigten Beispiel über 2 Rechner C₁ und C₂ erfolgt. Der Rechner C₁ hat als eine Hauptfunktion die präzise Ermittlung der Sequenz As der Zubringerleistung des Anlegers 45. Das entsprechende Steuersignal ist mit JG S₂ angegeben. Die Sequenz As ergibt sich dabei als Funktion von Verarbeitungstempo (V1), der Bogenlänge L, des Masses der Unterschuppung. Es ist möglich, den Rechner C₂ als Hauptrechner zu verwenden und zum Beispiel in dem Bereich des Ablegers anzuordnen. C₂ ist damit auch Eingabestation für die Anlage. C₁ kann auf derselben Komfortstufe aufgebaut sein als zweiter Hauptrechner oder als untergeordneter Rechner. Wesentlich ist die Koordination. Es kann aber auch nur ein einziger Rechner verwendet werden.

Bevorzugt werden die Rechner mit AC-Servomotoren mit Leistungselektronik dezentral am Ort ihr jeweiligen Recheneinsatzes angeordnet mit einem Datenbus, der je nach Erfordernis die Daten direkt zwischen den Vorortrechnern übermittelt. Dies betrifft ganz besonders das Sensorsignal für die Erkennung der oberen Kante der Bogenhinterkante sowie die Signale der Inkrementalgeber 18/19 des Kaschierwerkes für den Rechner C₂.

Praxisversuche haben gezeigt, dass die neue Lösung ganz besonders vorteilhaft in Kombination mit der älteren Lösung gemäss EP 706 863 angewendet oder von Fall zu Fall die eine oder andere Lösung eingesetzt wird. Nach der bisherigen Lösung wird der Geschwindigkeitsverlauf des Schneidmessers, insbesondere für den Schnitt entsprechend der Anlagegeschwindigkeit, und in Übereinstimmung mit der Bogenlänge (L) gesteuert. Die effektive Schneidbahn bzw. Kreislinie des Schneidmessers ist um ein geringes Mass tiefer gegenüber der ungestörten Bewegungsbahn des Laminates. Das Laminat wird während dem Schnitt entsprechend in die Bewegungsbahn gedruckt. Die Folientrennung erfolgt durch die Wärmewirkung sowie eine geringe mechanische Schneidkraft. Unter dem Messerwerk ist ein Stützband für das Laminat angeordnet, das mit dem Laminat etwa mit gleicher Geschwindigkeit mitbewegt wird. Die Folie wird von einer Laminatverfestigung nass geschnitten und die Laminatabschnitte werden getrennt. Das Schneidmesser führt für den Schnitt eine rotierende Bewegung gegenüber einem mitbewegten Stützband durch, und die Umlaufgeschwindigkeit des Schneidmessers wird über Rechnermittel gesteuert, wobei für jeden Schnitt das Messwerk als einen Schneidzyklus, auf die Geschwindigkeit des Laminates beschleunigt, während dem Schnitt mit dem Laminat etwa mit gleicher Geschwindigkeit mitbewegt und danach auf eine tiefere Geschwindigkeit verzögert wird. Über Rechnermittel sind die Verarbeitungsgeschwindigkeit sowie die Bogenlänge frei eingebbar, wobei das Schneidmesser aufgrund des effektiven Verarbeitungstempos und in Abhängigkeit der Bogenlänge gesteuert/geregelt wird. Die je momentane Verarbeitungsgeschwindigkeit wird über einen Hauptantrieb festgestellt und die übrigen Funktionen entsprechend koordiniert.

Zur Herstellung von UV-Laminaten wird die Folie mit Einzelbögen durch das Kaschierwerk zu einem Laminat vereinigt und mit UV-Strahlen fixiert. Folie und Bogen werden auf eine gleiche Geschwindigkeit zum Kaschierwerk gebracht und die Folie schubkraftfrei, schwimmend mit geringer Presskraft und möglichst spannungsfrei auf den Bögen aufgewalzt und das Laminat unmittelbar vor der Strahlenfixierung nass geschnitten. Die wesentlichen Schritte des Verfahrens sind:
a) Die unverarbeiteten Bögen werden auf der einen Endseite einer Anlage gelagert, im wesentlichen horizontal über die Verfahrensstrasse zu der anderen Endseite der Anlage geführt.
b) Die Folie wird nass getrennt, und die Folientrennung erfolgt durch Wärmewirkung eines thermischen Schneidmessers.
c) Die Umlaufgeschwindigkeit des Schneidmessers wird über Rechnermittel gesteuert und für jeden Schnitt das Messerwerk als einen Schneidzyklus auf die Geschwindigkeit des Laminates beschleunigt.

Das Verfahren ist besonders geeignet zum Trennen eines kaschierten Laminates, bestehend aus einer bahnförmigen Folie und Einzelbogen, wobei das Laminat kontinuierlich an einer Schneidstation vorbeigeführt und für den Folienschnitt abgestützt wird und ein Schneidmesser mit rotierender Bewegung auf das Laminat zuund weg von der Bewegungsbahn des Laminates bewegt und für den Schnitt mit etwa gleicher Geschwindigkeit mit dem Laminat geführt und lediglich die Folie durchgeschnitten wird. In einem oberen Bereich der Bewegung des Schneidmessers ist ein O-Position-Sensor angeordnet, zur Definierung eines 0-Punktes. Die Umlaufgeschwindigkeit des Schneidmessers ist über Rechnermittel steuerbar, derart, dass für jeden Schnitt das Messerwerk als einen Schneidzyklus, auf die Geschwindigkeit des Laminates beschleunigt, während dem Schnitt mit dem Laminat etwa mit gleicher Geschwindigkeit mitbewegt und danach auf eine tiefere Geschwindigkeit verzögert wird. Der 0-Punkt bzw. Eichpunkt ist in dem Bereich der tieferen Geschwindigkeit angeordnet und als Ausgangspunkt für die Errechnung des nächsten Zyklus verwendbar, wobei jeder Schneidzyklus einer vollen Umdrehung des Messerwerkes entspricht und die O-Position örtlich im oberen Bewegungsviertel des Drehkreises gewählt wird. Unterhalb dem Stützband sind Auflagestellen angeordnet, derart, dass die effektive Schneidbahn bzw. Kreislinie um ein geringes Mass tiefer ist, gegenüber der ungestörten Bewegungsbahn des Laminates, so dass das Schneidmesser das Laminat entsprechend nach unten drückt, wobei nicht nur die Wärmeeinwirkung sondern gleichzeitig auch eine geringe mechanische Schneidkraft wirkt. Das Schneidmesser weist einen elektrischen Draht oder einen feinen Metallstreifen auf, welcher durch elektrischen Widerstand aufheizbar ist.

## Patentansprüche

1. Verfahren zum Kaschieren und Trennen eines Laminates (8), bestehend aus einer bahnförmigen Folie (1) und Einzelbögen (2), wobei das Laminat (8) an einer Schneidstation (9) vorbeigeführt und die Schneidfunktion eines Schneidmessers (10) rechnergesteuert in Abhängigkeit zur Zufuhrgeschwindigkeit erfolgt, und die Einzelbögen (2) Stoss an Stoss oder geschuppt der Kaschierung zugeführt werden,
**dadurch gekennzeichnet,**
**dass** die Trennstellen noch vor der Kaschierung laufend durch einen Kantensensor (28) an der oberen Hinterkante des Bögen präzise detektiert werden und die Schneidfunkion für die Folie (1) auf der Basis des präzise detektierten kantensignale eingeleitet wird.

2. Verfahren nach Anspruch 1,
**dadurch gekennzeichnet,**
**dass** die Detektierung der Kante etwa in der Mitte der Hinterkante erfolgt.

3. Verfahren nach Anspruch 1 oder 2,
**dadurch gekennzeichnet,**
**dass** die Sende- und Empfangssignale eines Laser-, eines Mikrowellen- oder eines Infrarotstrahlers für die laufende Detektierung der Hinterkante verwendet werden.

4. Verfahren nach Anspruch 1 oder 2,
**dadurch gekennzeichnet,**
**dass** der Blasdruck einer Luftbtasdüse zur laufenden Detektierung der Bogenhinterkante verwendet wird.

5. Verfahren nach einem der Ansprüche 1 bis 4,
**dadurch gekennzeichnet,**
**dass** sowohl die Vorderkante, vorzugsweise über eine Lichtschranke (17) wie auch die Hinterkante, vorzugsweise über einen Laserstrahl detektiert wird.

6. Vorrichtung zum Trennen eines Laminates (8), bestehend aus einer bahnförmigen Folie (1) und Einzelbögen (2), wobei das Laminat (8) an einer Schneidstation (9) vorbeigeführt wird und die Schneidfunktion des Schneidmessers (10) rechnergesteuert in Abhängigkeit zur Zufuhrgeschwindigkeit erfolgt,
**dadurch gekennzeichnet,**
**dass** in dem Bereich vor der Laminierung ein Sensor (28) zur laufenden Detektierung der jeweiligen Hinterkante der Bögen angeordnet und die Schneidfunktion für die Folie (1) auf der Basis der präzise detektierten Kantensignate einleitbar ist.

7. Vorrichtung nach Anspruch 6,
**dadurch gekennzeichnet,**
**dass** vor einer Schneidstation (9) ein Kaschierwalzenpaar (7) und noch vor dem Kaschierwalzenpaar (7) der Sensor (28) zur laufenden Detektierung der Bogenhinterkante angeordnet ist und die Hinterkante am unkaschierten Bogen erfassbar ist.

8. Vorrichtung nach einem der Ansprüche 6 oder 7,
**dadurch gekennzeichnet,**
**dass** die unverarbeiteten Bögen auf der einen Endseite einer Anlage gelagert, im wesentlichen horizontal und vorzugsweise unterschuppt über die Verfahrensstrasse in Richtung der anderen Endseite der Anlage führbar sind und die Schneidstation (9) ein mit der Geschwindigkeit des Laminates (8) mitbewegbares Schneidmesser (10) und einen Umlaufregelantrieb für das Schneidmesser (10) aufweist, welches als thermisches Schneidmesser (10), insbesondere zum Nasstrennen der Folie (1) ausgebildet ist, wobei die Umlaufgeschwindigkeit des Schneidmessers (10) über Rechnermittel aufgrund der Antagegeschwindigkeit und des Sensorsignales steuerbar ist zur Beschleunigung des Schneidmessers (10) auf die Geschwindigkeit des Laminates (8) und für einen präzisen Schnitt der Folie (1).

9. Vorrichtung nach Anspruch 6 oder 7,
**dadurch gekennzeichnet,**
**dass** das Schneidmesser (10) als Laserschneidmesser, vorzugsweise mit mehreren unbeweglichen Laserschneidköpfen, ausgebildet ist und die Schneidfunktion aufgrund der Anlagegeschwindigkeit sowie des Sensorsignales steuerbar ist.

10. Vorrichtung nach einem der Ansprüche 6 bis 9,
**dadurch gekennzeichnet,**
**dass** der Sensor (28) als Infrarot-, Mikrowellen- oder Laserstrahisender und - empfänger ausgebildet ist.

11. Vorrichtung nach einem der Ansprüche 6 bis 10,
**dadurch gekennzeichnet,**
**dass** der Sensorstrahl in Transportrichtung leicht geneigt ausgerichtet und das Empfangssignal etwa senkrecht vom Sensor (28) empfangbar ist.

## Claims

1. Method for laminating and cutting a laminate (8), comprising a strip-shaped film (1) and individual sheets (2), the laminate (8) being conveyed past a cutting station (9) and a computer controlling the cutting process of a cutting knife (10) as a function of the feed rate, and the individual sheets (2) being fed to the lamination stage edge to edge or in an overlapping manner, **characterised in that**, before the lamination stage, the cutting points are continuously precisely detected by an edge sensor (28) on the upper rear edge of the sheets, and the cutting process for the film (1) is initiated on the basis of the precisely detected edge signals.

2. Method according to claim 1, **characterised in that** the edge is detected substantially in the centre of the rear edge.

3. Method according to either claim 1 or claim 2, **characterised in that** the transmission and reception signals of a laser, microwave or infrared radiator are used for continuously detecting the rear edge.

4. Method according to either claim 1 or claim 2, **characterised in that** the blowing pressure of an air jet nozzle is used for continuously detecting the sheet rear edge.

5. Method according to any one of claims 1 to 4, **characterised in that** the front edge is detected, preferably via a light barrier (1-7), and the rear edge is detected, preferably via a laser beam.

6. Device for cutting a laminate (8), comprising a strip-shaped film (1) and individual sheets (2), the laminate (8) being conveyed past a cutting station (9) and a computer controlling the cutting process of the cutting knife (10) as a function of the feed rate, **characterised in that**, a sensor (28) is arranged in the region before the lamination stage, for continuously detecting the respective rear edge of the sheets, and the cutting process for the film (1) may be initiated on the basis of the precisely detected edge signals.

7. Device according to claim 6, **characterised in that** a pair of laminating rollers (7) is arranged before a cutting station (9), the sensor (28) for continuously detecting the sheet rear edge is arranged before the pair of laminating rollers (7), and the rear edge may be detected on the unlaminated sheet.

8. Device according to either claim 6 or claim 7, **characterised in that** the unprocessed sheets are located at one end of an apparatus and may be conveyed, substantially horizontally and preferably while overlapping, via the path of movement in the direction of the other end of the apparatus, and the cutting station (9) comprises a cutting knife (10), which may be moved conjointly at the speed of the laminate (8), and a rotation regulating drive for the cutting knife (10), which is configured as a thermal cutting knife (10) in particular for wet-cutting the film (1)., it being possible, on the basis of the apparatus speed and the sensor signal, to control by computerised means the speed of rotation of the cutting knife (10), in order to accelerate the cutting knife (10) to the speed of the laminate (8) and cut the film (1) precisely.

9. Device according to either claim 6 or claim 7, **characterised in that** the cutting knife (10) is configured as a laser cutting knife, preferably comprising a plurality of stationary laser cutter heads, and the cutting process may be controlled on the basis of the apparatus speed and the sensor signal.

10. Device according to any one of claims 6 to 9, **characterised in that** the sensor (28) is configured as an infrared, microwave or laser beam transmitter and receiver.

11. Device according to any one of claims 6 to 10, **characterised in that** the sensor beam is slightly inclined in the conveying direction, and the reception signal may be received substantially perpendicularly by the sensor (28).

## Revendications

1. Procédé de contrecollage et de séparation d'un stratifié (8)constitué d'une feuille en forme de bande (1) et de feuilles séparées (2), le stratifié (8) étant acheminé devant une station de coupe (9) et la fonction de coupe d'un couteau (10) étant commandée par ordinateur en fonction de la vitesse d'alimentation, et les feuilles séparées (2) étant amenées au contrecollage bout à bout ou se chevauchant, **caractérisé en ce que** les points de séparation sont constamment détectés avec précision avant le contrecollage par un capteur de bord (28) sur bord arrière supérieur des feuilles et **en ce que** la fonction de coupe pour la feuille (1) est amorcée sur la base des signaux de bord détectés avec précision.

2. Procédé selon la revendication 1, **caractérisé en ce que** la détection du bord a lieu environ au milieu du bord arrière.

3. Procédé selon la revendication 1 ou 2, **caractérisé en ce que** les signaux d'émission et de réception d'un émetteur à laser, à micro-ondes ou à infrarouge sont utilisés pour la détection continue du bord arrière.

4. Procédé selon la revendication 1 ou 2, **caractérisé en ce que** la pression de soufflage d'une tuyère de soufflage d'air est utilisée pour la détection continue du bord arrière de la feuille.

5. Procédé selon une des revendications 1 à 4, **caractérisé en ce que** tant le bord avant, de préférence via un rideau lumineux (17) que le bord arrière, de préférence via un rayon laser, sont détectés.

6. Dispositif de séparation d'un stratifié (8) composé d'une feuille en forme de bande (1) et de feuilles séparées (2), le stratifié (8) étant acheminé devant une station de coupe (9) et la fonction de coupe du couteau (10) étant commandée par ordinateur en fonction de la vitesse d'alimentation, **caractérisé en ce qu'**un capteur (28) pour la détection continue du bord arrière de chaque feuille est disposé dans la zone située en amont du contrecollage et **en ce que** la fonction de coupe pour la feuille (1) peut être amorcée sur la base des signaux de bord détectés avec précision.

7. Dispositif selon la revendication 6, **caractérisé en ce qu'**une paire de rouleaux de contrecollage (7) et, avant encore la paire de rouleaux de contrecollage (7), le capteur (28) pour la détection continue du bord arrière de la feuille sont situés en amont d'une station de coupe (9) et **en ce que** le bord arrière de la feuille non contrecollée est détectable.

8. Dispositif selon une des revendications 6 ou 7, **caractérisé en ce que** les feuilles non transformées sont stockées sur une face d'extrémité d'une installation, peuvent être guidées vers l'autre face d'extrémité de l'installation, pour l'essentiel horizontalement et de préférence en se chevauchant, via la ligne de déplacement et **en ce que** la station de coupe (9) comporte un couteau (10) pouvant être déplacé conjointement avec la vitesse du stratifié (8) et un variateur de vitesse rotatif pour le couteau (10), qui est conçu sous forme de couteau thermique (10), en particulier pour la coupe humide du film (1), la vitesse de rotation du couteau (10) pouvant être commandée via un ordinateur sur la base de la vitesse de l'installation et du signal du capteur, afin d'accélérer le couteau (10) jusqu'à la vitesse du stratifié (8) et pour une coupe précise de la feuille (1).

9. Dispositif selon la revendication 6 ou 7, **caractérisé en ce que** le couteau (10) est conçu sous forme de couteau à laser, de préférence avec plusieurs têtes de coupe au laser fixes et **en ce que** la fonction de coupe peut être commandée sur la base de la vitesse de l'installation ainsi que du signal du capteur.

10. Dispositif selon l'une des revendications 6 à 9, **caractérisé en ce que** le capteur 28 est un capteur à émission et réception infrarouge, micro-onde ou laser.

11. Dispositif selon l'une quelconque des revendications 6 à 10, **caractérisé en ce que** le rayon du capteur est dirigé sous une légère inclinaison dans la direction du transport et **en ce que** le signal de réception est reçu sensiblement perpendiculairement par le capteur (28).
